(19) Europäisches Patentamt

European Patent Office

Office européen des brevets

(11) EP 0 508 020 B1

(12) EUROPEAN PATENT SPECIFICATION

(45) Date of publication and mention
of the grant of the patent:
24.07.1996 Bulletin 1996/30

(51) Int. Cl.$^6$: **B01D 53/56**, B01D 53/86

(21) Application number: 91400974.1

(22) Date of filing: 11.04.1991

(54) **Denitration catalyst and method**

Entstickungskatalysator und Methode

Catalyseur et méthode de dénitration

(84) Designated Contracting States:
AT BE DE ES FR IT

(43) Date of publication of application:
14.10.1992 Bulletin 1992/42

(73) Proprietor: MITSUBISHI JUKOGYO KABUSHIKI
KAISHA
Tokyo (JP)

(72) Inventors:
• Morii, Atsusi,
c/o Nagasaki Shipyard & Eng. Works
Nagasaki, Nagasaki Pref. (JP)
• Kobayashi, Norihisa,
c/o MITSUBISHI JUKOGYO K.K.
Tokyo (JP)
• Izumi, Jun,
c/o Nagasaki Technical Institute
Nagasaki, Nagasaki Pref. (JP)
• Yasutake, Akinori,
c/o Nagasaki Technical Instit.
Nagasaki, Nagasaki Pref. (JP)

(74) Representative: Keib, Gérard et al
Cabinet Claude Rodhain SA
3, rue Moncey
75009 Paris (FR)

(56) References cited:
EP-A- 0 311 066          EP-A- 0 393 905
EP-A- 0 393 917          DE-A- 3 802 871

Remarks:
The file contains technical information submitted
after the application was filed and not included in
this specification

EP 0 508 020 B1

Printed by Rank Xerox (UK) Business Services
2.13.0/3.4

## Description

The present invention relates to a method of removing NOx present in exhaust gases from combustors, such as boilers, gas turbines, gasoline engines, diesel engines and waste incinerators.

The release of NOx, which is present in exhaust gases from combustors and causes air pollution, is now under strict regulations. A variety of improvements in combustion processes have been devised, and denitration apparatuses have widely been used. As examples of improvement in a combustion process, the lowering of the temperature of a furnace and the utilization of the reducing property of fire have been employed because NOx is produced by the dissociation of $N_2$ and $O_2$ or by the reaction between nitrogen in the fuel and $O_2$ in the furnace at high temperatures. These methods have certain limitations in the extent of NOx reduction. A common method adopted in fixed NOx sources such as a boiler, therefore, is to add ammonia to the exhaust gas in an amount approximately equal to the amount of NOx in the exhaust gas at 300-400°C and bring the mixture in contact with a NOx reducing catalyst so that NOx is converted to $N_2$ and $H_2O$.

The methods of improving combustion mentioned above have limitations in NOx reduction, and denitration using ammonia and a reducing catalyst would likely be a popular method for the moment. It is vanadium pentoxide carried on a carrier of titanium oxide that is considered to be most active among catalysts used in this method. This catalyst of vanadium-titania type has been most widely used. Although this vanadium-titania catalyst has an advantage of being less prone to be poisoned by a high concentration of sulfur components which is often found in, for example, an exhaust gas from a coal fired boiler, it has the following problems:

(1) A vanadium-titania catalyst shows a SV value of about 30,000 ($h^{-1}$). Because if the value of SV is greater (which means higher catalytic activity), further reductions in fixed costs could be achieved owing to reduction in the amount of the catalyst used, and the power consumption could be also reduced due to smaller pressure losses in a catalyst layer, a catalyst with even higher activity is still strongly desired.
(2) The reduction property of vanadium carried in the vanadium-titania catalyst is poisoned by alkali metals, such as potassium, present in an exhaust gas.
(3) Titanium oxide used as a carrier is increasingly in demand as an ingredient for expensive metal materials and also as a white pigment for plastics and inks. Its price has trended upward and a cheaper substitute has been desired.

EP-A-0 393 917 discloses a method for reduction of nitrogen oxides comprising passing a gaseous stream containig nitrogen oxides, amonia and oxygen through a zeolite catalyst to selectively catalyse the reduction of nitrogen oxides. The method disclosed in this document includes the use of a zeolite catalyst which comprises a metal (e.g. iron or copper) promoted Na-Y zeolite.

EP-A-0 311 066 discloses a process for the production of copper-containing zeolite comprising subjecting a zeolite to ion exchange with copper ions in a aqueous solution containing a water soluble copper salt and ammonia. This patent application describes equally a process for catalytic decomposition of nitrogen oxides contained in a gas, comprising bringing said gas into contact with said copper-containing zeolite.

An object of the present invention is, in view of the above described state of art, to provide a method for removing NOx which can overcome the above described problems.

The inventors have experimentally confirmed that if the NOx containing gas to which ammonia has been added in an amount at least equivalent to the molar amount of NOx is brought into contact with a Cu (II) exchanged Y zeolite which has been exchanged with Cu(II) ions 60 to 200%, much higher activity can be achieved at a temperature between 300 and 750°C, compared to the widely used vanadium-titania catalyst. The present invention has been based on this experimental finding.

The denitration catalyst according to the present invention comprising a Cu (II) exchanged Y zeolite usable in a denitration process of a gas containing $NO_x$ using ammonia and said catalyst, wherein said catalyst is produced by exchanging 60 to 200% of exchangeable Na ions in a Na-Y zeolite with Cu (II) ions. The denitration method according to the present invention is defined in claim 2.

Also, it is possible to add ammonia to the exhaust gas, at a temperature of 300 to 750°C, and pass it through the above-described catalyst reactor.

According to the present invention, ammonia is added to a combustion exhaust gas containing NOx in a molar amount substantially equal to or more than the amount of NOx in the exhaust gas, and then the gas is led to a catalyst reactor filled with the Cu(II) exchanged Y zeolite at 300-750°C. NOx then reacts with coexisting ammonia and oxygen and converts to nitrogen and water.

The Cu(II) exchanged Y zeolite used in the present invention can be obtained by exchanging Na ion positions in an Na faujasite (mineral name) whose ratio of silica to alumina ($SiO_2/AlO_2$ ratio) is 5 or more with Cu(II) ions.

When an Na-Y zeolite is immersed and stirred in a Cu(II) ion solution, Na is exchanged by Cu(II). If the exchange ratio of Cu(II) is small, no particular differences are observed compared to the Na-Y zeolite. However, the exchange

ratio exceeds 30%, special activity particular to Cu(II) exchange is observed. Here, the ratio of Cu(II) exchange is defined as follows:

$$\text{Cu(II) exchange ratio} = \frac{\text{(mols of Cu(II) in zeolite after treatment) X 2}}{\text{(mols of Na in zeolite before treatment)}} \text{ X 100}$$

Although it had previously been noted that the exchange with Cu(II) is limited to 60%, it is now known that this limitation can be overcome by the following procedure:

(1) The process for ion exchange is automated to repeat the renewal of solutions.
(2) The exchange of Na ions is carried out using a Cu(II)-ammonia complex. (Professor Masakazu Iwamoto of Hokkaido University reported this method for Cu(II) exchange in <u>Shokubai</u>, Vol.31, No.2, 1989.)

The definition of the ion exchange ratio, as noted above, is expressed as the percentage of "exchanged" ions with respect to cations (normally $Na^+$ ions) which can be exchanged in the zeolite. For Cu(II), however, the exchange ratio can in fact be more than 100% when calculated according to the above definition. Here, we show values calculated by this conventional definition for the sake of unity.

It should be noted that a Y zeolite which is highly exchanged with Cu(II) shows much higher activity than the conventionally employed vanadium-titania catalyst. This is not disclosed by the above reference.

FIG. 1 is a chart showing flow for an embodiment of the present invention; and
FIGS. 2 and 3 are graphs indicating the effects of present invention: FIG. 2 shows relations between the temperature of the catalyst reactor and the denitration ratio; and FIG. 3 shows relations between the Cu(II) exchange ratio and the denitration ratio.

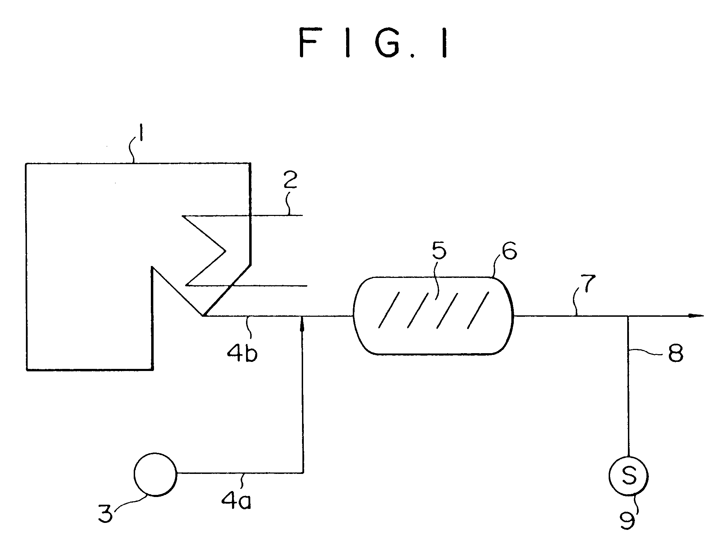

Referring to FIG. 1, an embodiment of the present invention will be explained below.

A combustor 1 used fuel oil A, and the concentration of NOx in the exhaust gas was 500ppm. The combustor 1 was provided with a heat exchanger 2 so that the temperature can be varied from 250°C to 1000°C. Numeral 3 indicates a container for liquified ammonia, and gasified ammonia was accompanied by steam and flowed through a flow passage 4a. From the flow passage 4a, the gasified ammonia which had been adjusted to 500ppm, a mole equivalent of NOx in the exhaust gas, was connected to an exhaust gas passage 4b and mixed into the exhaust gas which had been cooled down.

A gas mixture of NOx and ammonia passed through catalyst layers 6 filled with a catalyst 5 and reacted with oxygen present in the exhaust gas at a concentration of 4 volume % so that the mixture converts to nitrogen and water.

Here we shall explain the preparation of the Cu(II) exchanged Y zeolite.

Two methods exist for the preparation of the Cu(II) exchange, and we shall describe both here, but as long as the Cu(II) exchange ratio reaches 60 to 200%, either of these methods will achieve the same performance.

[Method 1]

After a crystal powder of an Na-Y zeolite is left open overnight so that it can absorb moisture, a slurry is made from this powder and water, and its pH value is adjusted to 4 using acetic acid. When copper (II) acetate ($Cu(II)(CH_3COO)_2$) is dropped into this slurry, Na ions are exchanged by Cu(II) and the Cu(II) exchanged zeolite is obtained.

If the Cu(II) concentration in the mother liquor exceeds 0.1M, excessive absorption occurs and CuO separates out by burning or the like which will be described later. Therefore the concentration should preferably kept under the above value. However, separated CuO does not participate in reactions. Most of Cu(II) absorbed excessively will remain bound to the zeolite and show considerable reaction activity.

Cu(II) ion exchange at one time is only about 20% in the exchange ratio. The filtration and renewal of the mother liquor have to be repeated a number of times before an exchange ratio of 60-200% can be achieved.

Although Cu(II) "exchange" of more than 100% cannot possibly take place according to the above definition of the exchange ratio, more than 100% of Cu(II) is in fact carried without separating from the zeolite.

Because the carrying of Cu(II) on a carrier is basically accomplished by ion exchange, values exceeding 100% are also expressed as the exchange ratio (mol %) defined above.

[Method 2]

After a crystal powder of an Na-Y zeolite is left open overnight so that it can absorb moisture, a slurry is made from this powder and water, and its pH value is adjusted to 7 using acetic acid or ammonia.

When a copper (II)-ammonia complex salt solution which has been prepared separately is dropped into this slurry, Na ions in the zeolite are exchanged with Cu(II)-ammonia complex ions, and the Cu(II) exchanged Y zeolite results.

Cu(II) ion exchange for one time is only about 50% in the exchange ratio. The filtration and renewal of the mother liquor have to be repeated a number of times before the exchange ratio reaches 60-200%.

This method is advantageous in that the Cu(II) ion exchange ratio is higher compared to the method described above.

The Cu(II) exchanged Y zeolite obtained by a process such as the above two methods was filtered and washed with water, and subsequently formed by extrusion molding. It was then dried preliminarily at 120°C and baked at 650°C for 1 hour to prepare a honeycomb catalyst 5 with a pitch of 4mm and a thickness of 1mm.

The gas which has finished the reaction was released out of the system through the passage 7, and a part of the gas was branched and collected through a sampling passage 8 for analysis.

Also, a chemiluminescence analyzer 9 was used for the analysis of $NO_x$.

In order to compare the effects of the present invention with conventional examples, the following were used as reference: (1) a vanadium-titania catalyst which has been widely used and (2) ZSM-5 zeolites with varying values of the Cu(II) exchange ratio between 0 and 200%.

In order to confirm the effects of the embodiment shown in FIG. 1, an experiment was carried out with the entrance $NO_x$ concentration being 2000ppm and the $O_2$ concentration being 4 volume % and the $NH_3/NO_x$ mole ratio being 1.0 at temperatures between 250 and 800°C.

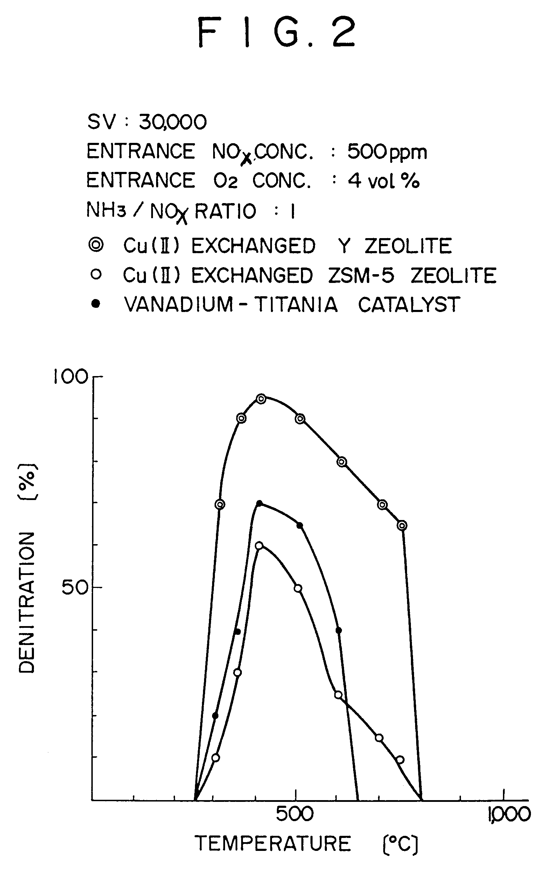

FIG. 2 shows the relation between the temperature of the Cu(II) exchanged Y zeolite and the percentage of denitration.

In FIG. 2, the Cu(II) exchanged Y zeolite with a Cu(II) exchange ratio of 150% is indicated by an annular symbol ◎, Cu(II) exchanged ZSM-5 zeolite with the Cu(II) exchange ratio of 150% shown as reference by a circular symbol ◯, and the vanadium-titania catalyst by a black circular symbol ●.

As seen from FIG. 2, the percentage of denitration of the Cu(II) exchanged Y zeolite increased rapidly around 300°C and reached a maximum at 400°C. While the denitration percentage reduced gradually as the temperature became higher, it remained in a practical range up to 750°C. The reaction activity was shown to be higher than the vanadium-titania catalyst in the broad range of temperature.

However, when the temperature reached 800°C the reaction stopped altogether. At the same time, the conversion of $NH_3$ to $NO_x$ and the thermal degradation of the zeolites began, and no practicality can be found.

Also, although high activity was expected for the ZSM-5 zeolite because of its high acid strength, thermal stability, resistance against acidity and the like, it turned out that the vanadium-titania catalyst, which is used currently, actually has higher activity.

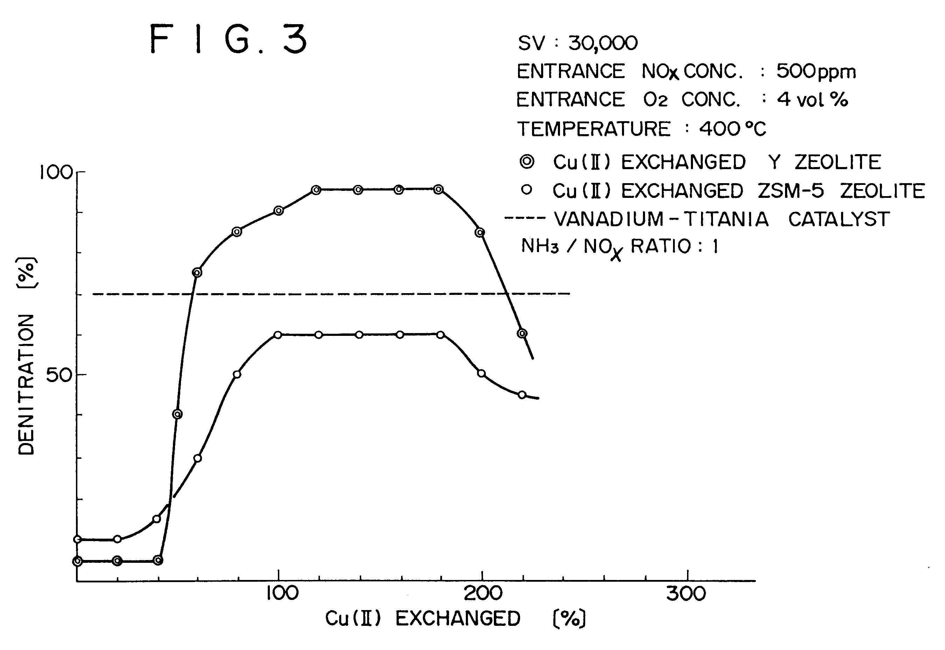

FIG. 3 shows the relation between the Cu(II) exchange ratio and the denitration percentage when the temperature of the reactor is 400°C. The activity of the vanadium-titania catalyst is shown with a broken line for reference.

When the exchange ratio was 40% or less, the Cu(II) exchanged Y zeolite (marked by ◎) showed little activity. When it exceeded 40% the denitration ratio increased rapidly and exceeded the activity level of the vanadium-titania catalyst at 60%. However, when the exchange ratio exceeded 180% the denitration percentage started decreasing gradually and became lower than that of the vanadium-titania catalyst over 200%. This is probably because separated CuO which increased in amount covered active spots of the catalyst.

With the Cu(II) exchanged ZSM-5 zeolite, when the Cu(II) exchange ratio was 40% the denitration ratio was higher than the Cu(II) exchanged Y zeolite. The increase of the denitration with the increasing Cu(II) exchanged ratio was not significant, and the denitration ratio did not exceed that of the conventional vanadium-titania catalyst.

Using the Cu(II) exchanged Y zeolite of the present invention for the purification of combustion exhaust gases, it is possible to carry out denitration at higher efficiency than a conventional vanadium-titania catalyst.

## Claims

1. Denitration catalyst comprising a Cu (II) exchanged Y zeolite usable in a denitration process of a gas containing NOx using ammonia and said catalyst, characterised in that said catalyst is produced by exchanging 60 to 200 % of exchangeable Na ions in a Na-Y zeolite with Cu (II) ions.

2. A denitration method for a gas containing NOx, using a catalyst and ammonia added in an amount at least equivalent to the molar amount of NOx and in presence of oxygen, said catalyst comprising a Cu (II) exchanged Y zeolite, wherein said gas containing NOx is passed at a temperature between 300 and 750°C through a catalyst reactor filled with a catalyst comprising a Cu(II) exchanged Y zeolite, characterised in that said zeolite is produced by exchanging 60 to 200 % of exchangeable Na ions in a Na-Y zeolite with Cu(II) ions by way of repeated renewal of solutions and by using a Cu(II)-ammonia or Cu(II)-acetic acid complex.

3. Denitration method according to claim 2, characterized in that ammonia is added to said gas containig NOx at temperatures of 300 to 750°C.

**Patentansprüche**

1. Entstickungskatalysator mit einem Cu(II) ausgetauschten Y Zeolithen zur Verwendung in einem Entstickungsverfahren für $NO_x$ haltiges Gas unter Verwendung von Ammoniak und des Katalysators, **dadurch gekennzeichnet**, daß der Katalysator durch Austauschen von 60 bis 200% der austauschbaren Na Ionen in einem Na-Y Zeolithen gegen Cu(II) Ionen hergestellt worden ist.

2. Entstickungsverfahren für ein $NO_x$ enthaltendes Gas unter Verwendung eines Katalysators und Ammoniak, das in einer Menge zugegeben wird, die zumindest gleich der Molarmenge von $NO_x$ ist, sowie in Gegenwart von Sauerstoff, wobei der Katalysator einen Cu(II) ausgetauschten Y Zeolithen enthält und wobei das $NO_x$ enthaltende Gas bei einer Temperatur zwischen 300 und 750°C durch einen Katalysatorreaktor geleitet wird, der mit einem Katalysator gefüllt ist, der einen Cu(II) ausgetauschten Y Zeolithen enthält, **dadurch gekennzeichnet**, daß der Zeolith durch Austauschen von 60 bis 200% von austauschfähigen Na Ionen in einem Na-Y Zeolithen gegen Cu(II) Ionen bei wiederholtem Erneuern von Lösungen und Verwendung eines Cu(II)-Ammoniak-oder Cu(II)-Essigsäuerekomplexes gebildet wird.

3. Entstickungsverfahren nach Anspruch 2, **dadurch gekennzeichnet**, daß Ammoniak dem $NO_x$ enthaltenden Gas bei Temperaturen von 300 bis 750°C zugegeben wird.

**Revendications**

1. Catalyseur de dénitration comprenant une zéolite Y échangée par Cu (II), utilisable dans un traitement de dénitration d'un gaz contenant NOx en utilisant de l'ammoniac et ledit catalyseur, caractérisé en ce que ledit catalyseur est produit en échangeant 60 à 200 % des ions Na échangeables dans une zéolite Na-Y avec des ions Cu (II).

2. Procédé de dénitration pour un gaz contenant NOx, utilisant un catalyseur et de l'ammoniac ajouté en une quantité au moins équivalente à la quantité molaire de NOx et en présence d'oxygène, ledit catalyseur comprenant une zéolite Y échangée par Cu (II), dans lequel on fait passer ledit gaz contenant NOx à une température entre 300 et 750 °C au travers d'un réacteur de catalyseur rempli d'un catalyseur comprenant une zéolite Y échangée par Cu (II), caractérisé en ce que ladite zéolite est produite en échangeant 60 à 200 % des ions Na échangeables dans une zéolite Na-Y avec des ions Cu (II) au moyen d'un renouvellement répété de solutions et en utilisant un complexe Cu(II)-ammoniac ou Cu(II)-acide acétique.

3. Procédé de dénitration selon la revendication 2, caractérisé en ce que l'ammoniac est ajouté audit gaz contenant NOx à des températures de 300 à 750 °C.

# F I G. I

EP 0 508 020 B1

# F I G . 2

SV : 30,000
ENTRANCE NO$_X$ CONC. : 500 ppm
ENTRANCE O$_2$ CONC. : 4 vol %
NH$_3$ / NO$_X$ RATIO : 1

◎ Cu(II) EXCHANGED Y ZEOLITE
○ Cu(II) EXCHANGED ZSM-5 ZEOLITE
● VANADIUM - TITANIA CATALYST

# FIG. 3

SV : 30,000
ENTRANCE NO$_x$ CONC. : 500ppm
ENTRANCE O$_2$ CONC. : 4 vol %
TEMPERATURE : 400 °C

◎ Cu(II) EXCHANGED Y ZEOLITE
○ Cu(II) EXCHANGED ZSM-5 ZEOLITE
---- VANADIUM-TITANIA CATALYST
NH$_3$ / NO$_x$ RATIO : 1

EP 0 508 020 B1